# EUROPÄISCHE PATENTANMELDUNG

(11) **EP 0 695 629 A2**
(43) Veröffentlichungstag der Anmeldung: **07.02.1996**
(21) Anmeldenummer: 95106261.1
(22) Anmeldetag: 26.04.1995
(51) Int. Cl.: B32B 27/28, B32B 27/08, C08L 23/16

(54) **Verbundwerkstoff, Verfahren zu dessen Herstellung und Verwendung desselben**

(30) Priorität: 12.07.1994 DE 4424416; 07.04.1995 DE 19513159
(71) Anmelder: ALKOR GMBH KUNSTSTOFFE, D-81451 München (DE)
(72) Erfinder: Altmann, Heinz, Dipl. Ing., D-82131 Gauting (DE); Edwald, Egon, D-81671 München (DE); Schneider, Manfred, Dipl. Ing., D-86928 Hagenheim (DE)
(74) Vertreter: Seiler, Siegfried

(57) **Zusammenfassung**

Die vorliegende Erfindung betrifft einen Verbundwerkstoff, ein Verfahren zu dessen Herstellung und die Verwendung desselben, wobei von dem Verbundwerkstoff eine Schicht oder Folie eine 60 bis 600 µm dicke, polyolefinhaltige Dekoroberschicht oder Dekoroberfolie (1) ist, die aus einem Polyolefin mit einem MFI-Wert (230/2,16 kg) von 3 bis 9 g/10 min oder aus einem Polyolefingemisch mit einem MFI-Wert (230/2,16 kg) von 3 bis 9 g/10 min sowie einer bestimmten Zusammensetzung besteht. Die mindestens 0,3 bis 100 µm dicke, füllstofffreie oder füllstoffarme, haftvermittelnde Zwischenschicht oder Zwischenfolie (2) enthält ein Propylenpfropfpolymerisat mit reaktiven Gruppen mit einem MFI-Wert (230 °C/2,16 kg) von 3 bis 9 g/10 min oder ein funktionalisiertes Propylenpfropfpolymerisat mit einem MFI-Wert (230 °C/2,16 kg) von 3 bis 9 g/10 min. Eine darunter angeordnete 0,3 bis 100 µm dicke füllstoffarme oder füllstoffreie Unterschicht oder Unterfolie (3) enthält ein Ethylen-Vinylalkohol-Copolymerisat (EVOH) mit einem Wert (230 °C/2,16 kg) von 3 bis 9 g/10 min und mit einem Ethylengehalt bezogen auf das Ethylen-Vinylalkohol-Copolymerisat von 25 bis 48 Gew.-%.

## Beschreibung

Die vorliegende Erfindung betrifft einen Verbundwerkstoff, der aus mindestens drei oder mehrere Schichten oder Folien besteht, von denen mindestens eine Schicht oder Folie eine polyolefinhaltige Schicht oder Folie ist, eine daran anschließende Zwischenschicht oder Zwischenfolie aus einem Polyolefin mit reaktiven Gruppen besteht und eine darunter angeordnete Schicht der Folie ein Ethylen-Vinvlalkohol-Copolymerisat (EVOH) enthält, wobei gegebenenfalls weitere Schichten angeordnet sind. Die Erfindung betrifft weiterhin ein Verfahren zur Herstellung des Verbundwerkstoffes und die Verwendung desselben.

Im Rahmen der Erfindung gelingt es, unter Einhaltung ganz bestimmter Zusammensetzungen der einzelnen Schichten oder Folien, vorzugsweise Möbel, Möbelteile oder Pappen, vorteilhaft Verbundwerkstoffe unter Vermeidung der Delaminierungsgefahr herzustellen oder diese zu beschichten.

Es ist bereits bekannt, reaktive Gruppen enthaltende Polyethylenpfropfpolymerisate mit anderen Substraten, u.a. auch Ethylen-Vinylacetat-Copolymerisat zu beschichten und Verbundwerkstoffe herzustellen. Derartige Verbundschichten sind jedoch für die Herstellung von Möbeln, Möbelteile oder für Verbunde mit Pappen nicht gut geeignet, da sie nicht die gewünschten Dekoreigenschaften mit der Anforderung an die Beanspruchung dieser Teile in Kombination aufweisen.

Polyolefinfolien für Möbel und Möbelteile sind bereits bekannt (vgl. unter anderem EP-B-0213441). Diese Polyolefinfolien oder polyolefinhaltigen Folien müssen jedoch entweder Füllstoffe mit besonderen reaktiven Substanzen in bestimmten Gewichtsmengen enthalten und/oder durch spezielle Verfahren, zum Beispiel durch Coronabehandlung oder Plasmabehandlung vorbehandelt werden, damit sie bedruckbar und/oder verklebbar sind. Darüberhinaus sind diese Polyolefinfolien sehr stark statisch aufgeladen, so daß sie für viele Anwendungen nur begrenzt einsatzfähig sind.

Ziel und Aufgabe der vorliegenden Erfindung war es, einen Verbundwerkstoff zu finden, der für Möbel, Möbelteile und für Pappen geeignet ist oder zur Beschichtung oder Herstellung derselben und diese Nachteile nicht besitzt. Bei den Verbundwerkstoffen oder bei der Herstellung derselben sollte eine Corona- oder Plasmanachbehandlung nicht erforderlich sein. Weiterhin sollte auf eine zusätzliche antistatische Beschichtung verzichtet werden können. Der Verbundwerkstoff sollte gut verarbeitbar, bedruckbar und sehr haftfest sowie leicht herstellbar sein oder gut für Beschichtungen von Holz, Holzwerkstoffen und Pappen geeignet sein.

Erfindungsgemäß wurde festgestellt, daß diesen Zielen und Aufgaben ein Verbundwerkstoff, der aus mindestens drei oder mehrere Schichten oder Folien besteht, gerecht wird, von denen mindestens eine Schicht oder Folie eine polyolefinhaltige Schicht oder Folie ist, eine daran anschließende Zwischenschicht oder Zwischenfolie aus einem Polyolefin mit reaktiven Gruppen besteht und eine darunter angeordnete Schicht oder Folie ein Ethylen-Vinylalkohol-Copolymerisat (EVOH) enthält, wobei gegebenenfalls weitere Schichten angeordnet sind. Gemäß der Erfindung ist die mehrschichtige Verbundfolie für Möbel, Möbelteile oder Pappen durch Coextrusion oder Mehrfachextrusion hergestellt oder der Verbundwerkstoff enthält eine entsprechende Verbundfolie, wobei von der Verbundfolie eine Schicht oder Folie eine 60 bis 600 µm dicke, polyolefinhaltige Dekoroberschicht oder Dekoroberfolie (1) ist, die aus einem Polyolefin mit einem MFI-Wert (230/2,16 kg) von 3 bis 9 g/10 min oder aus einem Polyolefingemisch mit einem MFI-Wert (230/2,16 kg) von 3 bis 9 g/10 min besteht, ausgewählt aus der Gruppe von Propylenhomo- oder -copolymerisat oder einer Mischung oder Legierung von Propylenhomo- und/oder -copolymerisat mit einem Polyethylen, mit oder ohne Zusatz von bis zu 20 Gew.-% eines Elastomeren (bezogen auf das Gesamtgewicht des Kunststoffes in der Dekoroberfolie), wobei die Dekorschicht oder Dekorfolie (bezogen auf 100 Gew-Teile des Polymeren der Oberschicht oder Oberfolie) 0,1 bis 30 Gew.-Teile Farbstoffe oder Farbpigmente, 0,01 bis 5 Gew. -Teile Stabilisatoren sowie 0 bis 50 Gew. -Teile Füllstoffe und/oder andere Verarbeitungshilfsmittel oder Zusatzmittel enthält, und mindestens eine weitere Schicht oder Folie eine 0,3 bis 100 µm dicke, füllstofffreie oder füllstoffarme, haftvermittelnde Zwischenschicht oder Zwischenfolie (2), enthaltend ein Propylenpfropfpolymerisat mit reaktiven Gruppen mit einem MFI-Wert (230 °C/2,16 kg) von 3 bis 9 g/10 min oder ein funktionalisiertes Propylenpfropfpolymerisat mit einem MFI-Wert (230 °C/2,16 kg) von 3 bis 9 g/10 min, wobei die Zwischenschicht oder das Propylenpfropfpolymerisat der Zwischenschicht polyethylenfrei oder polyethylenarm (Polyethylengehalt unter 10 Gew.-%, bezogen auf das Polymere) ist. An der Zwischenschicht oder Zwischenfolie (2), insbesondere darunter angeordnet ist mindestens eine weitere Schicht oder Folie, bestehend aus einer 0,3 bis 100 µm dicken füllstoffarmen oder füllstofffreien Unterschicht oder Unterfolie (3), enthaltend ein Ethylen-Vinylalkohol-Copolymerisat (EVOH) mit einem MFI-Wert (230 °C/2,16 kg) von 3 bis 9 g/10 min und mit einem Ethylengehalt bezogen auf das Ethylen-Vinylalkohol-Copolymerisat von 25 bis 48 Gew.-%.

Sobald der Ethylengehalt bzw. Polyethylengehalt die angegebenen Werte der Zwischenschicht oder Zwischenfolie (2) und/oder die Unterschicht oder Unterfolie (3) überschreiten, d.h. der Ethylen- bzw. Polyethylengehalt vergrößert wird, treten Nachteile auf. So vergrößert sich u.a. die Delaminierungsgefahr.

Gemäß einer bevorzugten Ausführungsform enthält die polyolefinhaltige Dekoroberschicht oder Dekoroberfolie (1) bezogen auf 100 Gew.-Teile Polymer 0,5 bis 25 Gew.-Teile Farbstoffe und/oder Farbpigmente, 0,05 bis 3 Gew.-Teile UV- und/oder Wärmestabilisatoren, 0 bis 30 Gew. -Teile Füllstoffe und/oder Verarbeitungshilfs- und Zusatzstoffe, wobei das Polyolefin oder Polyolefingemisch einen MFI-Wert (230 °C/2,16 kg) von 4 bis 8 g/10 min aufweist. Das Propylenpfropfpolymerisat der Zwischenschicht oder das funktionalisierte Propylenpfropfpolymerisat ist durch Aufpfropfen reaktiver Substanzen, vorzugsweise monomerer Substanzen oder Verbindungen, mit polaren Gruppen hergestellt, wobei der Polyethylengehalt der Zwischenschicht unter 3 Gew.-% liegt, vorzugsweise polyethylenfrei ist, und der Vinylalkoholgehalt des Ethylen-Vinylalkohol-Copolymerisates der Unterschicht (3) über 60 Gew.-% beträgt, wobei die Polymere oder Polymergemische der Dekoroberschicht oder Dekoroberfolie (1), der Zwischenschicht oder Zwischenfolie (2) und der Unterschicht oder Unterfolie (3) so ausgewählt sind, daß sie einen MFI-Wert (230 °C/2,16 kg) von 4 bis 8 g/10 min aufweisen.

Die Dekoroberschicht oder Dekoroberfolie (1) weist bevorzugt eine Dicke von 80 bis 400 µm auf, die Zwischenschicht (2) beträgt vorzugsweise 0,5 bis 25 µm, besonders bevorzugt 1 bis 20 µm, und die Unterschicht oder Unterfolie (3) hat vorzugsweise eine Dicke von 0,5 bis 25 µm, besonders bevorzugt 1 bis 20 µm, und/oder der Gesamtpolypropylengehalt in der Dekoroberschicht oder Deckoroberfolie ist größer als 50 Gew.-%, vorzugsweise größer als 60 Gew.-% (bezogen auf das Polymere der Dekoroberschicht oder Dekoroberfolie).

Die funktionellen oder reaktiven Gruppen am Propylenpfropfpolymerisat stellen vorzugsweise Carboxyl- oder carboxylhaltige Gruppen, Säureanhydridgruppen, Sulfonylgruppen oder reaktive stickstoffhaltige Gruppen dar oder sie enthalten diese entsprechenden Säure- oder Säurenahydrid-Gruppen.

Das funktionalisierte Propylenpfropfpolymerisat ist bevorzugt mit Maleinsäureanhydrid (MAH), Maleinsäure oder Azido-Sulfonyl-Benzoesäure (ASB) aufgepfropft.

Nach einer bevorzugten Ausführungsform beträgt der Ethylengehalt des in der Unterschicht oder Unterfolie (3) enthaltenen Ethylen-Vinylalkohol-Copolyrnerisates (EVOH) 28 bis 38 Gew.-% (bezogen auf das EVOH). Dadurch wird in Kombination mit den anderen Schichten oder Folien die Delaminierungsgefahr noch weiter verringert bzw. die Haftfestigkeit erhöht.

Die Schichtdicke der Dekoroberschicht oder Dekoroberfolie (1) beträgt ein Mehrfaches der Summe der Schichtdicken der Zwischenschicht (2) und Unterschicht oder Unterfolie (3) und der Vinylalkohlolgehalt des Ethylen-Vinylalkohol-Copolymerisates (EVOH) der Unterschicht oder Unterfolie (1) ist auf mehr als 65 Gew.-%, eingestellt oder beträgt mehr als 65 Gew.-%.

Nach einer bevorzugten Ausführungsform ist bzw. sind auf der Dekoroberschicht oder Dekoroberfolie (1) einq oder mehrere teilflächige, vorzugsweise in Mustern oder Figuren angeordnete, Druckschicht(en) (4) und darauf vollflächig oder teilflächig mindestens eine Lackschicht (5) angeordnet.

Bevorzugt steht die Schichtdicke der Dekoroberschicht oder Dekoroberfolie (1) zu der Summe der Schichtdicken der Zwischenschicht (2) und Unterschicht oder Unterfolie (3) im Verhältnis 6:1 bis 25:1, vorzugsweise 7:1 bis 20:1, und/oder das Verhältnis der Schichtdicken der Dekoroberschicht oder Dekoroberfolie zur Zwischenschicht und Unterschicht beträgt 12:1:1 bis 42:1:1, vorzugsweise 14:1:1 bis 40:1:1, und/oder als Polyethylen ist in der Dekoroberschicht oder Dekoroberfolie in der Mischung oder Legierung mit Propylenhomo- und/oder -copolymerisat ein HDPE, LDPE, LLPE und/oder VLDPE oder eine Mischung von zwei oder mehreren der Bestandteile enthalten.

Der Verbundwerkstoff gemäß der vorliegenden Erfindung besteht entweder aus der Verbundfolie, die die Schichten oder Folien (1), (2) und (3) enthält und die zur Beschichtung von Holz, Holzwerkstoffen oder Pappen und dgl. verwendet wird, oder aus einem Verbund dieser Verbundfolie mit Holz, Holzwerkstoffen, Pappen und dgl. unmittelbar.

Nach einer bevorzugten Ausführungsform weist die Verbundfolie vor dem Bedrucken und/oder Verkleben (mit Holz, Holzwerkstoff oder Pappe) einen Wassergehalt auf, der bezogen auf das eingesetzte Ethylen-Vinylalkohol-Copolymerisat 0,05 bis 15 Gew.-%, vorzugsweise 0,1 bis 8 Gew.-% (bezogen auf das eingesetzte Ethvlen-Vinylalkohol-Copolvmerisat mit 100 Gew. -Teilen) beträgt und/oder darauf eingestellt wird.

Nach einer besonders bevorzugten Ausführungsform steht die Verbundfolie mit der Unterfolie (3) mit mindestens einer Kleberschicht oder Klebstoffschicht (6), vorzugsweise auf der Basis von Polyvinylacetat-Copolymerisat (PVAC), Ethylen-Vinylacetat-Copolymerisat (EVA), Methacrylsäure (bzw. Metacrylat) oder Polymethacrylat, Polyurethan, Acrylester (bzw. Acrylat) oder Polyacrylat in Form eines Einkomponentenklebers, Zweikomponentenklebers oder Heißsiegelklebers, vorzugsweise jedoch als Dispersionskleber, mit einem Holz- oder Holzteile enthaltenden Formkörper, Formteil oder Platte oder mit einer Pappe (7), vorzugsweise einer Holzspanplatte, einem Spanplattenteil oder einem Spanplattenzuschnitt, einem Holzwerkstoffteil, einer Holzwerkstoffplatte, einer Faserplatte oder einer faserhaltigen Platte oder einer Pappe, einem Papier oder einem Pappenzuschnitt, in Verbindung.

Die Erfindung betrifft weiterhin ein Verfahren zur Herstellung eines Verbundwerkstoff enthaltend mindestens drei oder mehrere Schichten oder Folien, von denen mindestens eine Schicht oder Folie eine polyolefinhaltige Schicht oder Folie ist, eine daran anschließende Zwischenschicht oder Zwischenfolie aus einem Polyolefin mit reaktiven Gruppen besteht und eine darunter angeordnete Schicht oder Folie ein Ethylen-Vinvlalkohol-Copolymerisat (EVOH) enthält, wobei gegebenenfalls weitere Schichten angeordnet sind. Gemäß der Erfindung wird die mehrschichtige Verbundfolie für Möbel, Möbelteile oder Pappen durch Coextrusion oder Mehrfachextrusion hergestellt oder der Verbundwerkstoff enthält eine entsprechende Verbundfolie, wobei von der Verbundfolie eine Schicht oder Folie eine
1. 60 bis 600 µm dicke, polyolefinhaltige Dekoroberschicht oder Dekoroberfolie (1) ist, die aus einem Polyolefin mit einem MFI-Wert (230 °C/2,16 kg) von 3 bis 9 g/10 min oder aus einem Polyolefingemisch mit einem MFI-Wert (230 °C/2,16 kg) von 3 bis 9 g/10 min besteht, ausgewählt aus der Gruppe von Propylenhomo- oder -copolymerisat oder eine Mischung oder Legierung von Propylenhomo- und/oder -copolymerisat mit einem Polyethylen, mit oder ohne Zusatz von bis zu 20 Gew.-% eines Elastomeren (bezogen auf das Gesamtgewicht des Kunststoffes in der Dekoroberfolie), wobei die Dekorschicht oder Dekorfolie (bezogen auf 100 Gew-Teile des Polymeren der Oberschicht oder Oberfolie) 0,1 bis 30 Gew.-Teile Farbstoffe oder Farbpigmente, 0,01 bis 5 Gew.-Teile Stabilisatoren sowie 0 bis 50 Gew. -Teile Füllstoffe und/oder andere Verarbeitungshilfsmittel oder Zusatzmittel enthält,
2. mindestens 0,3 bis 100 µm dicke, füllstofffreie oder füllstoffarme, haftvermittelnde Zwischenschicht (2) enthaltend ein Propylenpfropfpolymerisat mit reaktiven Gruppen mit einem MFI-Wert (230 °C/2,16 kg) von 3 bis 9 g/10 min oder ein funktionalisiertes Propylenpfropfpolymerisat, wobei die Zwischenschicht oder das Propylenpfropfpolymerisat der Zwischenschicht polyethylenfrei oder polyethylenarm (Polyethylengehalt unter 10 Gew.-%, bezogen auf das Polymere) ist sowie
3. mindestens einer darunter angeordneten 0,3 bis 100 µm dicken füllstoffarmen oder füllstofffreien Unterschicht oder Unterfolie (3), enthaltend ein Ethylen-Vinylalkohol-Copolymerisat (EVOH) mit einem MFI-Wert (230 °C/2,16 kg) von 3 bis 9 g/10 min mit einem Ethylengehalt bezogen auf das Ethylen-Vinylalkohol-Copolymerisat von 25 bis 48 Gew.-%,
wobei die Verbundfolie nach der Mehrfachextrusion oder Coextrusion geprägt und danach oder zu einem späteren Zeitpunkt unter Anwendung von aufgesprühtem, vernebeltem oder aufgespritztem Wasser oder eingeleiteten Wasserdampf befeuchtet wird.

Nach einer bevorzugten Ausführungsform des erfindungsgemäßen Verfahrens wird für die Mehrschichtextrusion eine Zusammensetzung verwendet, bei der die polyolefinhaltige Dekoroberschicht oder Dekoroberfolie (1) bezogen auf 100 Gew.-Teile Polymer 0,5 bis 25 Gew.-Teile Farbstoffe und/oder Farbpigmente, 0,05 bis 3 Gew.-Teile UV- und/oder Wärmestabilisatoren, 0 bis 30 Gew. -Teile Füllstoffe und/oder Verarbeitungshilfs- und Zusatzstoffe enthält, das verwendete Propylenpfropfpolymerisat der Zwischenschicht oder das funktionalisierte Propylenpfropfpolymerisat ist durch Aufpfropfen reaktiver Substanzen, vorzugsweise monomerer Substanzen oder Verbindungen, mit polaren Gruppen hergestellt, wobei der Polyethylengehalt der Zwischenschicht unter 3 Gew.-% liegt, vorzugsweise polyethylenfrei ist, und der Vinylalkoholgehalt des Ethylen-Vinylalkohol-Copolymerisates der Unterschicht (3) über 60 Gew.-% beträgt, wobei die Polymere oder Polymergemische der Dekoroberschicht oder Dekoroberfolie (1) der Zwischenschicht oder Zwischenfolie (2) und der Unterschicht oder Unterfolie (3) so ausgewählt werden, daß sie einen MFI-Wert (230 °C/2,16 kg) von 4 bis 8 g/10 min aufweisen.

Bevorzugt wird bei der Herstellung die Schichtdicke, die Düsenöffnung, die Breitschlitzextruderdüse und/oder der Abstand der Walzen oder Kalanderwalzen so eingestellt, daß die Dekoroberschicht oder Dekoroberfolie (1) in einer Dicke von 80 bis 400 µm, die Zwischenschicht in einer Dicke von 0,5 bis 25 µm, vorzugsweise von 1 bis 20 µm, und die Unterschicht oder Unterfolie (3) in einer Dicke von 0,5 bis 25 µm, vorzugsweise von 1 bis 20 µm, durch Mehrschichtextrusion hergestellt wird und/oder der Gesamtpropylengehalt in der Dekoroberschicht oder Dekoroberfolie wird auf größer als 50 Gew.-%, vorzugsweise größer als 60 Gew.-% (bezogen auf den gesamten Polymergehalt der Dekoroberschicht oder Dekoroberfolie), eingestellt.

Nach einer bevorzugten Ausführungsform wird die Verbundfolie mit der Unterfolie (3) mit mindestens einer Kleberschicht oder Klebstoffschicht (6), vorzugsweise auf der Basis von Methacrylsäureester (oder Methacrylat) oder Polymethacrylat, Polyvinylacetat-Copolymerisat (PVAC),
(Ethylen-Vinylacetat-Copolymerisat (EVA), Polyurethan, Acrylester (oder Acrylat) und/oder Polyacrylat, als Einkompenentenkleber, Dispersionskleber, Zweikomponentenkleber oder Heißsiegelkleber, vorzugsweise jedoch mit einem Dispersionskleber, mit einem Holz- oder Holzteile enthaltenden Formkörper, Formteil, Platte oder Pappe (7), vorzugsweise einer Holzspanplatte, einem Spanplattenteil oder einem Spanplattenzuschnitt, einem Holzwerkstoffteil, einer Holzwerkstoffplatte, einer Faserplatte einer faserhaltigen Platte oder einem Pappenzuschnitteil, in Verbindung gebracht und verklebt.

Innerhalb des erfindungsgemäßen Verfahrens wird im Verbund eine Unterschicht oder Unterfolie (3) verwendet, deren Gesamt-Ethylengehalt, vorzugsweise Ethylengehalt des Ethylen-Vinylalkohol-Copolymerisates (EVOH) 28 bis 38 Gew.-% beträgt oder darauf eingestellt wird.

Die Schichtdicke der Dekoroberschicht oder Dekoroberfolie (1) wird so eingestellt, daß sie ein Mehrfaches der Summe der Schichtdicken der Zwischenschicht oder Zwischenfolie (2) und Unterschicht oder Unterfolie (3) bei der Extrusion, bei der Kalandrierung oder dem Aufbringen beträgt und/oder der Vinylalkohlolgehalt des Ethvlen-Vinylalkohol-Copolymerisates (EVOH) der Unterfolie (1) wird auf mehr als 65 Gew.-%, eingestellt ist oder mehr als 65 Gew.-% eingestellt.

Bevorzugt wird bzw. werden auf der Dekoroberschicht oder Dekoroberfolie (1) eine oder mehrere teilflächige, vorzugsweise in Mustern oder Figuren angeordnete, Druckschicht(en) (4) und darauf vollflächig oder teilflächig mindestens eine Lackschicht (5) aufgebracht.

Nach einer bevorzugten Ausführungsform wird die Schichtdicke der Oberschicht oder Oberfolie zu der Summe der Schichtdicken der Zwischenschicht (2) und Unterschicht oder Unterfolie (3) im Verhältnis 6:1 bis 25:1, vorzugsweise 7:1 bis 20:1, eingestellt und/oder es wird ein Verhältnis der Schichtdicken der Oberschicht oder Oberfolie zur Zwischenschicht und Unterschicht 12:1:1 bis 42:1:1, vorzugsweise 14:1:1 bis 40:1:1, eingehalten. Als Polyethylen in der Dekoroberschicht oder Dekoroberfolie (1) in der Mischung oder Legierung mit Propylenhomo- und/oder -copolymerisat wird bevorzugt ein HDPE, LDPE, LLPE und/oder VLDPE, vorzugsweise HDPE, verwendet oder mitverwendet.

Nach einer besonder bevorzugten Ausführungsform des erfindungsgemäßen Verfahrens wird die Verbundfolie, vorzugsweise die Unterschicht oder Unterfolie (3), vor dem Bedrucken und/oder Verkleben (mit Holz, Holzwerkstoff oder Pappe) auf einen Wassergehalt eingestellt, der bezogen auf das eingesetzte Ethylen-Vinylalkohol-Copolymerisat 0,05 bis 15 Gew.-%, vorzugsweise 0,1 bis 8 Gew.-% (bezogen auf das eingesetzte Ethylen-Vinylalkohol-Copolymerisat mit 100 Gew.-Teilen) beträgt. Das Wasser wird dabei auf die Unterschicht oder Unterfolie (3) aufgebracht oder aufgestrichen, vorzugsweise aufgespritzt, aufgesprüht oder in Form eines Wassernebels oder Wasserdampfes aufgebracht. Nachdem der Wassergehalt eingestellt ist, wird die Verbundfolie so aufgewickelt, daß die Unterschicht oder Unterfolie (3) die "innere Wickelschicht" darstellt (Vorratshaltung oder Transport bis zur Verklebung) oder die Verbundfolie bzw. der Verbundwerkstoff wird nach der Befeuchtung bzw. nach der Einstellung des Wassergehaltes, gegebenenfalls nach einer Trocknung, unter Aufrechterhaltung oder weitgehenden Aufrechterhaltung des genannten Wassergehaltes, verklebt.

Die Erfindung betrifft weiterhin die Verwendung des Verbundwerkstoffes zur Herstellung von Möbeln, Möbelteilen, vorzugsweise Schubkästen sowie auch die Verwendung des Verbundwerkstoffes für bzw. als beschichtete Pappen, vorzugsweise für Aktenordner, Bucheinbände und Büroorganisationsmittel.

### Beispiele

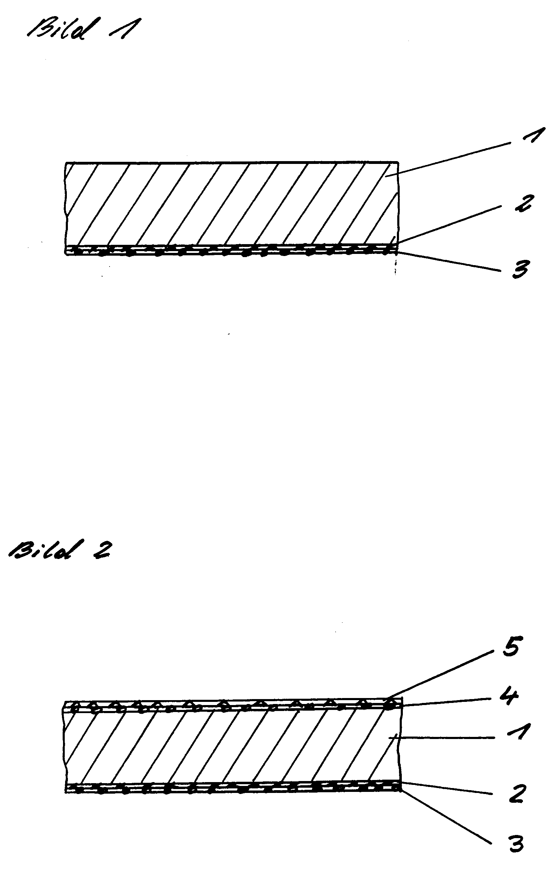

### Beispiel 1 (Bild 1)

1. PP-Homopolymerisat/HDPE (Mischung 80/20) insgesamt 100 Gew.-Teile
   + 20 Gew.-Teile Pigmente
   + 3 Gew.-Teile Additive
   - PP: : MFI 230 °C/2,16 kg - 6 g/10 min
   - HDPE: : MFI 230 °C/2,16 kg - 7 g/10 min
2. PP-Pfropfpolymerisat
   1 % MAH aufgepfropft
   MFI 230 °C/2,16 kg - 5,5 g/10 min
3. EVOH mit einem Ethylengehalt von 32 %
   MFI 230 °C/2,16 kg - 5 g/10 min

### Beispiel 2 (Bild 1)

1. PP-Homopolymerisat - PP-Elastomer
   insgesamt 100 Gew.-Teile
   95 Gew.-Teile PP
   MFI 230 °C/2,16 kg - 6 g/10 min
   5 Gew.-Teile PP-Elastomer (modifiziertes Polypropylen)
   MFI 230 °C/2,16 kg - 5,8 g/10 min
   + 10 Gew. -Teile Pigmente
   + 3 Gew. -Teile Additive
2. PP-Pfropfpolymerisat
   1 % ASB aufgepfropft
   MFI 230 °C/2,16 kg - 4,5 g/10 min
3. EVOH mit Ethylengehalt von 32 %
   MFI 230 °C/2,16 - 5,5 g/10 min

### Beispiel 3 (Bild 2)

1.

| | |
|---|---|
| PP-Homopolymerisat | 80 Teile |
| HDPE | 15 Teile |
| SEBS | 5 Teile |
| + Pigmente | 15 Teile |
| + Additive | 3 Teile |

PP : MFI 230 °C/2,16 kg - 6 g/10 min
HDPE : MFI 230 °C/2,16 kg - 7 g/10 min
2. PP-Pfropfpolymerisat
1 % MAH aufgepfropft
MFI 230 °C/2,16 kg - 4,5 g/10 min
3. EVOH mit einem Ethylengehalt von 26 %
MFI 230 °C/2,16 kg - 4,5 g/10 min
4. Druckschichten
5. Lackschicht aus Zweikomponenten PU-Lack
Die Verbundfolie gemäß Beispielen 1 bis 3 wurden für die Verklebung auf Holzwerkstoffen verwendet.

### Beispiel 4 (Bild 1)

1.

| | |
|---|---|
| PP-Homopolymerisat | 80 Teile |
| Linear Low Density PE | 18 Teile |
| PE-Elastomer | 2 Teile |
| Pigmente | 2 Teile |
| Additive | 3 Teile |

PP : MFI 230 °C/2,16 kg - 7 g/10 min
LLDPE : MFI 230 °C/2,16 kg - 8 g/10 min
PE-Elastomer: MFI 230 °C/2,16 kg - 8 g/10 min
Beispiel 4 betrifft die Verklebung der Pappe

## Patentansprüche

1. Verbundwerkstoff enthaltend mindestens drei oder mehrere Schichten oder Folien, von denen mindestens eine Schicht oder Folie eine polyolefinhaltige Schicht oder Folie ist, eine daran anschließende Zwischenschicht oder Zwischenfolie, die aus einem Polyolefin mit reaktiven Gruppen besteht und eine darunter angeordnete Schicht oder Folie ein Ethylen-Vinylalkohol-Copolymerisat (EVOH) enthält, wobei gegebenenfalls weitere Schichten angeordnet sind, dadurch gekennzeichnet, daß die mehrschichtige Verbundfolie für Möbel, Möbelteile oder Pappen durch Coextrusion oder Mehrfachextrusion hergestellt ist oder der Verbundwerkstoff eine entsprechende Verbundfolie enthält, wobei von der Verbundfolie eine Schicht oder Folie eine
1. 60 bis 600 µm dicke, polyolefinhaltige Dekoroberschicht oder Dekoroberfolie (1) ist, die aus einem Polyolefin mit einem MFI-Wert (230/2,16 kg) von 3 bis 9 g/10 min oder aus einem Polyolefingemisch mit einem MFI-Wert (230/2,16 kg) von 3 bis 9 g/10 min besteht, ausgewählt aus der Gruppe von Propylenhomo- oder -copolymerisat oder einer Mischung oder Legierung von Propylenhomo- und/oder -copolymerisat mit einem Polyethylen, mit oder ohne Zusatz von bis zu 20 Gew.-% eines Elastomeren (bezogen auf das Gesamtgewicht des Kunststoffes in der Dekoroberfolie), wobei die Dekorschicht oder Dekorfolie (bezogen auf 100 Gew-Teile des Polymeren der Oberschicht oder Oberfolie) 0,1 bis 30 Gew.-Teile Farbstoffe oder Farbpigmente, 0,01 bis 5 Gew.-Teile Stabilisatoren sowie 0 bis 50 Gew. -Teile Füllstoffe und/oder andere Verarbeitungshilfsmittel oder Zusatzmittel enthält,
2. mindestens 0,3 bis 100 µm dicke, füllstofffreie oder füllstoffarme, haftvermittelnde Zwischenschicht oder Zwischenfolie (2) enthaltend ein Propylenpfropfpolymerisat mit reaktiven Gruppen mit einem MFI-Wert (230 °C/2,16 kg) von 3 bis 9 g/10 min oder ein funktionalisiertes Propylenpfropfpolymerisat mit einem MFI-Wert (230 °C/2,16 kg) von 3 bis 9 g/10 min, wobei die Zwischenschicht oder das Propylenpfropfpolymerisat der Zwischenschicht polyethylenfrei oder polyethylenarm (Polyethylengehalt unter 10 Gew.-%, bezogen auf das Polymere) ist sowie
3. mindestens einer darunter angeordneten 0,3 bis 100 µm dicken füllstoffarmen oder füllstofffreien Unterschicht oder Unterfolie (3), enthaltend ein Ethylen-Vinylalkohol-Copolymerisat (EVOH) mit einem MFI-Wert (230 °C/2,16 kg) von 3 bis 9 g/10 min und mit einem Ethylengehalt bezogen auf das Ethylen-Vinylalkohol-Copolymerisat von 25 bis 48 Gew.-%.

2. Verbundwerkstoff nach Anspruch 1, dadurch gekennzeichnet, daß die polyolefinhaltige Dekoroberschicht oder Dekoroberfolie (1) bezogen auf 100 Gew.-Teile Polymer 0,5 bis 25 Gew.-Teile Farbstoffe und/oder Farbpigmente, 0,05 bis 3 Gew.-Teile UV- und/oder Wärmestabilisatoren, 0 bis 30 Gew. -Teile Füllstoffe und/oder Verarbeitungshilfs- und Zusatzstoffe enthält, wobei das Polyolefin oder Polyolefingemisch einen MFI-Wert (230 °C/2,16 kg) von 4 bis 8 g/10 min aufweist, daß das Propylenpfropfpolymerisat der Zwischenschicht oder das funktionalisierte Propylenpfropfpolymerisat durch Aufpfropfen reaktiver Substanzen, vorzugsweise monomerer Substanzen oder Verbindungen, mit polaren Gruppen hergestellt ist, wobei der Polyethylengehalt der Zwischenschicht unter 3 Gew.-% liegt, vorzugsweise polyethylenfrei ist, und der Vinylalkoholgehalt des Ethylen-Vinylalkohol-Copolymerisates der Unterschicht (3) über 60 Gew.-% beträgt, wobei die Polymere oder Polymergemische der Dekoroberschicht oder Dekoroberfolie (1), der Zwischenschicht oder Zwischenfolie (2) und der Unterschicht oder Unterfolie (3) so ausgewählt sind, daß sie einen MFI-Wert (230 °C/2,16 kg) von 4 bis 8 g/10 min aufweisen.

3. Verbundwerkstoff nach Ansprüchen 1 und 2, dadurch gekennzeichnet, daß die Dekoroberschicht oder Dekoroberfolie (1) eine Dicke von 80 bis 400 µm, die Zwischenschicht (2) von 0,5 bis 25 µm, vorzugsweise von 1 bis 20 µm, und die Unterschicht oder Unterfolie (3) von 0,5 bis 25 µm, vorzugsweise von 1 bis 20 µm, aufweist und/oder der Gesamtpolypropylengehalt in der Dekoroberschicht oder Deckoroberfolie größer als 50 Gew.-%, vorzugsweise größer als 60 Gew.-% (bezogen auf das Polymere der Dekoroberschicht oder Dekoroberfolie), ist.

4. Verbundwerkstoff nach einem oder mehreren der Ansprüche 1 bis 3, dadurch gekennzeichnet, daß die funktionellen oder reaktiven Gruppen am Propylenpfropfpolymerisat Carboxyl- oder carboxylhaltige Gruppen, Säureanhydridgruppen, Sulfonylgruppen oder reaktive stickstoffhaltige Gruppen darstellen.

5. Verbundwerkstoff nach einem oder mehreren der Ansprüche 1 bis 4, dadurch gekennzeichnet, daß das funktionalisierte Propylenpfropfpolymerisat mit Maleinsäureanhydrid (MAH), Maleinsäure oder Azido-Sulfonyl-Benzoesäure (ASB) aufgepfropft ist.

6. Verbundwerkstoff nach einem oder mehreren der Ansprüche 1 bis 5, dadurch gekennzeichnet, daß der Ethylengehalt des in der Unterschicht oder Unterfolie (3) enthaltenen Ethylen-Vinylalkohol-Copolyinerisates (EVOH) 28 bis 38 Gew.-% (bezogen auf das EVOH) beträgt.

7. Verbundwerkstoff nach einem oder mehreren der Ansprüche 1 bis 6, dadurch gekennzeichnet, daß die Schichtdicke der Dekoroberschicht oder Dekoroberfolie (1) ein Mehrfaches der Summe der Schichtdicken der Zwischenschicht (2) und Unterschicht oder Unterfolie (3) beträgt und der Vinylalkohlolgehalt des Ethylen-Vinylalkohol-Copolymerisates (EVOH) der Unterschicht oder Unterfolie (1) auf mehr als 65 Gew.-%, eingestellt ist oder mehr als 65 Gew.-% beträgt.

8. Verbundwerkstoff nach einem oder mehreren der Ansprüche 1 bis 7, dadurch gekennzeichnet, daß auf der Dekoroberschicht oder Dekoroberfolie (1) eine oder mehrere teilflächige, vorzugsweise in Mustern oder Figuren angeordnete, Druckschicht(en) (4) und darauf vollflächig oder teilflächig mindestens eine Lackschicht (5) angeordnet ist.

9. Verbundwerkstoff nach einem oder mehreren der Ansprüche 1 bis 8, dadurch gekennzeichnet, daß die Schichtdicke der Oberschicht oder Oberfolie (1) zu der Summe der Schichtdicken der Zwischenschicht (2) und Unterschicht oder Unterfolie (3) im Verhältnis 6:1 bis 25:1, vorzugsweise 7:1 bis 20:1, steht oder das Verhältnis der Schichtdicken der Oberschicht oder Oberfolie zur Zwischenschicht und Unterschicht 12:1:1 bis 42:1:1, vorzugsweise 14:1:1 bis 40:1:1, beträgt oder daß als Polyethylen in der Dekoroberschicht oder Dekoroberfolie in der Mischung oder Legierung mit Propylenhomo- und/oder -copolymerisat ein HDPE, LDPE, LLPE und/oder VLDPE enthalten ist.

10. Verbundwerkstoff nach einem oder mehreren der Ansprüche 1 bis 9, dadurch gekennzeichnet, daß die Verbundfolie vor dem Bedrucken und/oder Verkleben (mit Holz, Holzwerkstoff oder Pappe) einen Wassergehalt aufweist, der bezogen auf das eingesetzte Ethylen-Vinylalkohol-Copolvmerisat 0,05 bis 15 Gew.-%, vorzugsweise 0,1 bis 8 Gew.-% (bezogen auf das eingesetzte Ethylen-Vinylalkohol-Copolyinerisat mit 100 Gew.-Teilen) beträgt.

11. Verbundwerkstoff nach einem oder mehreren der Ansprüche 1 bis 10, dadurch gekennzeichnet, daß die Verbundfolie mit der Unterfolie (3) mit mindestens einer Kleberschicht oder Klebstoffschicht (6), vorzugsweise auf der Basis von Polyvinylacetat-Copolymerisat (PVAC), Ethylen-Vinylacetat-Copolymerisat (EVA), Polyurethan, Acrylester und/oder Acrylat, als Einkomponentenkleber, Zweikomponentenkleber oder Heißsiegelkleber, vorzugsweise jedoch mit einem Dispersionskleber, mit einem Holz- oder Holzteile enthaltenden Formkörper, Formteil oder Platte (7), vorzugsweise einer Holzspanplatte, einem Spanplattenteil oder einem Spanplattenzuschnitt, einem Holzwerkstoffteil, einer Holzwerkstoffplatte, einer Faserplatte oder einer faserhaltigen Platte oder einer Pappe oder einem Pappenzuschnitt, in Verbindung steht.

12. Verfahren zur Herstellung eines Verbundwerkstoff enthaltend mindestens drei oder mehrere Schichten oder Folien, von denen mindestens eine Schicht oder Folie eine polyolefinhaltige Schicht oder Folie ist, eine daran anschließende Zwischenschicht oder Zwischenfolie aus einem Polyolefin mit reaktiven Gruppen besteht und eine darunter angeordnete Schicht oder Folie ein Ethylen-Vinylalkohol-Copolymerisat (EVOH) enthält, wobei gegebenenfalls weitere Schichten angeordnet sind, dadurch gekennzeichnet, daß die mehrschichtige Verbundfolie für Möbel, Möbelteile oder Pappen durch Coextrusion oder Mehrfachextrusion hergestellt wird oder der Verbundwerkstoff eine entsprechende Verbundfolie enthält, wobei von der Verbundfolie eine Schicht oder Folie eine
1. 60 bis 600 µm dicke, polyolefinhaltige Dekoroberschicht oder Dekoroberfolie (1) ist, die aus einem Polyolefin mit einem MEZ-Wert (230 °C/2,16 kg) von 3 bis 9 g/10 min oder aus einem Polyolefingemisch mit einem MFI-Wert (230 °C/2,16 kg) von 3 bis 9 g/10 min besteht, ausgewählt aus der Gruppe von Propylenhomo- oder -copolymerisat oder eine Mischung oder Legierung von Propylenhomo- und/oder -copolymerisat mit einem Polyethylen, mit oder ohne Zusatz von bis zu 20 Gew.-% eines Elastomeren (bezogen auf das Gesamtgewicht des Kunststoffes in der Dekoroberfolie), wobei die Dekorschicht oder Dekorfolie (bezogen auf 100 Gew-Teile des Polymeren der Oberschicht oder Oberfolie) 0,1 bis 30 Gew.-Teile Farbstoffe oder Farbpigmente, 0,01 bis 5 Gew. -Teile Stabilisatoren sowie 0 bis 50 Gew. -Teile Füllstoffe und/oder andere Verarbeitungshilfsmittel oder Zusatzmittel enthält,
2. mindestens 0,3 bis 100 µm dicke, füllstofffreie oder füllstoffarme, haftvermittelnde Zwischenschicht (2) enthaltend ein Propylenpfropfpolymerisat mit reaktiven Gruppen mit einem MFI-Wert (230 °C/2,16 kg) von 3 bis 9 g/10 min oder ein funktionalisiertes Propylenpfropfpolymerisat, wobei die Zwischenschicht oder das Propylenpfropfpolymerisat der Zwischenschicht polyethylenfrei oder polyethylenarm (Polyethylengehalt unter 10 Gew.-%, bezogen auf das Polymere) ist sowie
3. mindestens einer darunter angeordneten 0,3 bis 100 µm dicken füllstoffarmen oder füllstofffreien Unterschicht oder Unterfolie (3), enthaltend ein Ethylen-Vinylalkohol-Copolymerisat (EVOH) mit einem MFI-Wert (230 °C/2,16 kg) von 3 bis 9 g/10 min mit einem Ethylengehalt bezogen auf das Ethylen-Vinylalkohol-Copolymerisat von 25 bis 48 Gew.-%,
daß die Verbundfolie nach der Mehrfachextrusion oder Coextrusion geprägt und danach oder zu einem späteren Zeitpunkt unter Anwendung von aufgesprühtem, vernebeltem oder aufgespritztem Wasser oder eingeleiteten Wasserdampf befeuchtet wird.

13. Verfahren nach Anspruch 12, dadurch gekennzeichnet, daß für die Mehrschichtextrusion eine Zusammensetzung verwendet wird, bei der die polyolefinhaltige Dekoroberschicht oder Dekoroberfolie (1) bezogen auf 100 Gew.-Teile Polymer 0,5 bis 25 Gew.-Teile Farbstoffe und/oder Farbpigmente, 0,05 bis 3 Gew.-Teile UV- und/oder Wärmestabilisatoren, 0 bis 30 Gew.-Teile Füllstoffe und/oder Verarbeitungshilfs- und Zusatzstoffe enthält, das Propylenpfropfpolymerisat der Zwischenschicht oder das funktionalisierte Propylenpfropfpolymerisat durch Aufpfropfen reaktiver Substanzen, vorzugsweise monomerer Substanzen oder Verbindungen, mit polaren Gruppen hergestellt ist, wobei der Polyethylengehalt der Zwischenschicht unter 3 Gew.-% liegt, vorzugsweise polyethylenfrei ist, und der Vinylalkoholgehalt des Ethylen-Vinylalkohol-Copolymerisates der Unterschicht (3) über 60 Gew.-% beträgt, wobei die Polymere oder Polymergemische der Dekoroberschicht oder Dekoroberfolie (1) der Zwischenschicht oder Zwischenfolie (2) und der Unterschicht oder Unterfolie (3) so ausgewählt werden, daß sie einen MFI-Wert (230 °C/2,16 kg) von 4 bis 8 g/10 min aufweisen.

14. Verfahren nach Ansprüchen 12 und 13, dadurch gekennzeichnet, daß die Dekoroberschicht oder Dekoroberfolie (1) in einer Dicke von 80 bis 400 µm, die Zwischenschicht in einer Dicke von 0,5 bis 25 µm, vorzugsweise von 1 bis 20 µm, und die Unterschicht oder Unterfolie (3) in einer Dicke von 0,5 bis 25 µm, vorzugsweise von 1 bis 20 µm, durch Mehrschichtextrusion hergestellt wird und/oder der Gesamtpropylengehalt in der Dekoroberschicht oder Dekoroberfolie auf größer als 50 Gew.-%, vorzugsweise größer als 60 Gew.-% (bezogen auf den gesamten Polymergehalt der Dekoroberschicht oder Dekoroberfolie), eingestellt wird.

15. Verfahren nach einem oder mehreren der Ansprüche 12 bis 14, dadurch gekennzeichnet, daß mit der Unterfolie (3) mit mindestens einer Kleberschicht oder Klebstoffschicht (6), vorzugsweise auf der Basis von Polyvinylacetat-Copolymerisat (PVAC), Ethylen-Vinylacetat-Copolymerisat (EVA), Polyurethan, Acrylester und/oder Acrylat, als Einkomponentenkleber, Zweikomponentenkleber oder Heißsiegelkleber, vorzugsweise jedoch mit einem Dispersionskleber, mit einem Holz- oder Holzteile enthaltenden Formkörper, Formteil, Platte oder Pappe (7), vorzugsweise einer Holzspanplatte, einem Spanplattenteil oder einem Spanplattenzuschnitt, einem Holzwerkstoffteil, einer Holzwerkstoffplatte, einer Faserplatte einer faserhaltigen Platte oder einem Pappenzuschnitteil, in Verbindung gebracht und verklebt wird.

16. Verfahren nach einem oder mehreren der Ansprüche 12 bis 15, dadurch gekennzeichnet, daß im Verbund eine Unterschicht oder Unterfolie (3) verwendet wird, deren Gesamt-Ethylengehalt, vorzugsweise Ethylengehalt des Ethylen-Vinylalkohol-Copolymerisates (EVOH) 28 bis 38 Gew.-% beträgt oder darauf eingestellt wird.

17. Verfahren nach einem oder mehreren der Ansprüche 12 bis 16, dadurch gekennzeichnet, daß für die Schichtdicke der Dekoroberschicht oder Dekoroberfolie (1) ein Mehrfaches der Summe der Schichtdicken der Zwischenschicht oder Zwischenfolie (2) und Unterschicht oder Unterfolie (3) bei der Extrusion eingehalten wird und der Vinylalkohlolgehalt des Ethylen-Vinylalkohol-Copolymerisates (EVOH) der Unterfolie (1) auf mehr als 65 Gew.-%, eingestellt ist oder mehr als 65 Gew.-% eingestellt wird.

18. Verfahren nach einem oder mehreren der Ansprüche 12 bis 17, dadurch gekennzeichnet, daß auf der Dekoroberschicht oder Dekoroberfolie (1) eine oder mehrere teilflächige, vorzugsweise in Mustern oder Figuren angeordnete, Druckschicht(en) (4) und darauf vollflächig oder teilflächig mindestens eine Lackschicht (5) aufgebracht wird.

19. Verfahren nach einem oder mehreren der Ansprüche 12 bis 18, dadurch gekennzeichnet, daß die Schichtdicke der Oberschicht oder Oberfolie zu der Summe der Schichtdicken der Zwischenschicht (2) und Unterschicht oder Unterfolie (3) im Verhältnis 6:1 bis 25:1, vorzugsweise 7:1 bis 20:1, eingestellt werden oder das Verhältnis der Schichtdicken der Oberschicht oder Oberfolie zur Zwischenschicht und Unterschicht 12:1:1 bis 42:1:1, vorzugsweise 14:1:1 bis 40:1:1, eingehalten wird und/oder daß als Polyethylen in der Dekoroberschicht oder Dekoroberfolie (1) in der Mischung oder Legierung mit Propylenhomo- und/oder -copolymerisat ein HDPE, LDPE, LLPE und/oder VLDPE, vorzugsweise HDPE, verwendet oder mitverwendet wird.

20. Verfahren nach einem oder mehreren der Ansprüche 12 bis 19, dadurch gekennzeichnet, daß die Verbundfolie vor dem Bedrucken und/oder Verkleben (mit Holz oder Holzwerkstoff) auf einen Wassergehalt eingestellt wird, der bezogen auf das eingesetzte Ethylen-Vinylalkohol-Copolymerisat 0,05 bis 15 Gew.-%, vorzugsweise 0,1 bis 8 Gew.-% (bezogen auf das eingesetzte Ethylen-Vinylalkohol-Copolymerisat mit 100 Gew.-Teilen) beträgt.

21. Verwendung des Verbundwerkstoffes nach einem oder mehreren der Ansprüche 1 bis 20 zur Herstellung von Möbeln, Möbelteilen, vorzugsweise Schubkästen, sowie beschichteten Pappen, vorzugsweise Aktenordner, Bucheinbände und Büroorganisationsmittel.
